# EUROPÄISCHE PATENTSCHRIFT

(11) **EP 1 367 287 B1**
(45) Veröffentlichungstag und Bekanntmachung des Hinweises auf die Patenterteilung: **03.11.2004**
(21) Anmeldenummer: 03009584.8
(22) Anmeldetag: 29.04.2003
(51) Int. Cl.: F16F 9/46

(54) **Hydraulischer Stossdämpfer**
Hydraulic damper
Amortisseur hydraulique

(30) Priorität: 28.05.2002 DE 10223556
(43) Veröffentlichungstag der Anmeldung: 03.12.2003
(73) Patentinhaber: ThyssenKrupp Bilstein GmbH, 58256 Ennepetal (DE)
(72) Erfinder: Lang, Steffen, Dipl.-Ing., 58256 Ennepetal (DE)

(56) Entgegenhaltungen:
- DE-A- 3 608 738
- DE-C- 10 138 487
- FR-A- 2 590 952
- US-A- 4 997 068

## Beschreibung

Die Erfindung betrifft einen hydraulischen Stoßdämpfer nach dem Oberbegriff des Anspruchs 1, siehe DE-A-36 08 738.

Hydraulische Stoßdämpfer werden zur Dämpfung der Bewegung von über Federn angelenkten Radaufhängungen vorzugsweise bei Kraftfahrzeugen eingesetzt.

Dabei erfolgt die Dämpfung durch das Durchpressen von Dämpfungsflüssigkeit durch vorzugsweise federbelastete Durchtritte durch einen Arbeitskolben von einem Arbeitsraum in einen anderen Arbeitsraum des mit Dämpfungsflüssigkeit gefüllten Stoßdämpferrohres.

Um eine definierte verringerte Dämpfung bei kleinen Kolbengeschwindigkeiten zu zielen, ist es bekannt, hydraulisch parallel zu den Durchbrüchen durch den Arbeitskolben Bypassöffnungen vorzusehen, die die beiden Arbeitsräume hydraulisch miteinander verbinden. Es ist weiterhin bekannt, den Querschnitt der Durchtrittsöffnungen des Bypasses einstellbar zu gestalten.

Die EP 1 006 292 A1 zeigt einen derartigen Stoßdämpfer. Der Bypass, der die Arbeitsräume verbindet, ist in einer axialen Bohrung der Kolbenstange angeordnet und mit seitlichen Auslässen durch die Kolbenstange versehen, die die Verbindung zu den beiden Arbeitsräumen bilden. Über eine Stellstange in der hohlen Kolbenstange ist der Bypassquerschnitt verstellbar ausgebildet. Die Stellstange wirkt auf ein als Nadelventil ausgebildetes Stellventil. Nachteilig bei dieser Ausbildung kann nur ein fester Bypassquerschnitt eingestellt werden. Das bedeutet, dass der Bypass eine gleich bleibende Öffnung sowohl für die Strömung in Zugrichtung der Kolbenstange als auch für die Strömung in Druckrichtung der Kolbenstange aufweist.

Bekannt ist, den Bypass entweder für die Strömung in Zugrichtung oder für die Strömung in Druckrichtung zu sperren. Dadurch kann nachteilig jedoch nur die Strömung in einer Bewegungsrichtung eingestellt werden.

Nach der EP-A-1 281 888 ist darüber hinaus ein Stand der Technik gemäß Artikel 54(3), (4) EPÜ bekannt, bei dem die Bypassquerschnitte für die Strömung in Zugrichtung der Kolbenstange und für die Strömung in Druckrichtung unabhängig voneinander fest einstellbar sind. Nachteilig gestaltet sich bei diesem hydraulischen Stoßdämpfer die Stelleinrichtung äußerst kompliziert. Auch die Einstellung des Bypassquerschnittes ist äußerst schwierig, weil sie indirekt erfolgt.

Der Erfindung liegt die Aufgabe zugrunde, bei einem gattungsgemäßen Stoßdämpfer eine einfache manuelle Verstellung der Bypassquerschnitte zu ermöglichen und darüber hinaus die Einstelleinrichtung und den Stoßdämpfer einfach zu gestalten.

Diese Aufgabe wird erfindungsgemäß mit den Merkmalen des Patentanspruchs 1 gelöst. Vorteilhafte Aus- und Weiterbildungen sind in den Ansprüchen 2 bis 4 beschrieben.

Die mit der Erfindung erzielten Vorteile bestehen insbesondere darin, dass in einfacher Weise ein unterschiedlicher Bypassquerschnitt für die Strömung in Zugrichtung und für die Strömung in Druckrichtung unabhängig voneinander fest einstellbar ausgebildet und der Stoßdämpfer einfach aufgebaut ist.

Ein Ausführungsbeispiel der Erfindung ist in der Zeichnung dargestellt und wird im Folgenden näher beschrieben. Es zeigen
- Fig. 1: eine schematische Darstellung des Stoßdämpfers,
- Fig. 2: eine vergrößerte Darstellung der Stelleinrichtung an der Kolbenstangenverlängerung und
- Fig. 3: eine andere Ausbildung der Stelleinrichtung entsprechend Fig. 2

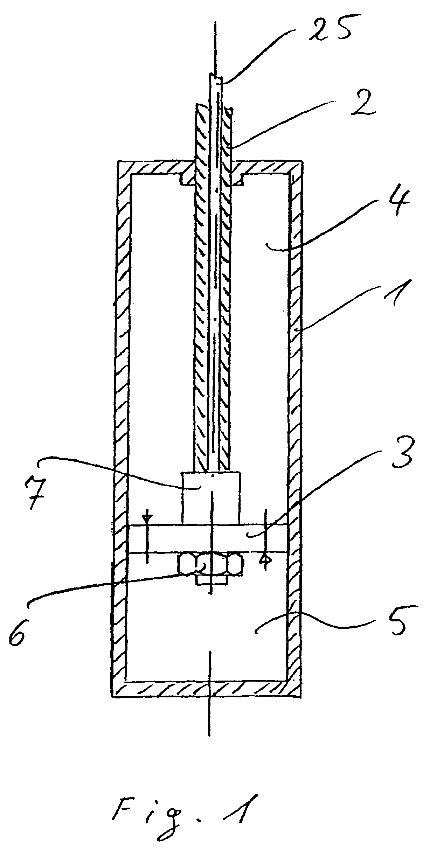

Der Stoßdämpfer, wie er schematisch in Fig. 1 dargestellt ist, weist ein Stoßdämpferrohr 1 auf, das mit Dämpfungsflüssigkeit gefüllt ist. Eine Kolbenstange 2, an dessen Ende ein Arbeitskolben 3 angebunden ist, taucht oszillierend in das Stoßdämpferrohr 1 ein. Der Arbeitskolben 3 ist mit nicht dargestellten Durchbrüchen und Dämpfungsventilen versehen. Er trennt den Innenraum des Stoßdämpfers in zwei Arbeitsräume 4, 5.

Die Strömung der Dämpfungsflüssigkeit in Zugrichtung der Kolbenstange erfolgt durch den Arbeitskolben 3 vom oberen Arbeitsraum 4 in den unteren Arbeitsraum 5 und wird hierbei durch die Durchbrüche und Dämpfungsventile gebremst. In umgekehrter Weise durchströmt die Dämpfungsflüssigkeit den Arbeitskolben 3 in Druckrichtung der Kolbenstange vom unteren Arbeitsraum 5 in den oberen Arbeitsraum 4.

Befestigungselemente, wie Scheiben und Muttern 6, dienen zum Befestigen des Arbeitskolbens 3 an der Kolbenstange 2, die zu diesem Zweck an seiner Außenseite mit einem nicht dargestellten Gewinde versehen ist.

Die Bypasseinrichtung ist im Ausführungsbeispiel in einer Kolbenstangenverlängerung 7 angeordnet, die zwischen der Kolbenstange 2 und dem Arbeitskolben 3 mit beiden verschraubt ist. Die Verschraubung der Kolbenstangenverlängerung 7 mit der Kolbenstange 2 ist nur schematisch durch ein Gewinde 8 angedeutet. Die Verschraubung der Kolbenstangenverlängerung 7 mit dem Arbeitskolben 3 erfolgt über einen nach unten ragenden Zapfen 9, der mit einem Gewinde 10 ausgebildet ist, auf das die Mutter 6 aufgeschraubt wird. Der Zapfen 9 ist Teil des Gehäuses 11 der Kolbenstangenverlängerung 7. Innerhalb dieses Gehäuses 11 ist die eigentliche Bypasseinrichtung angeordnet.

Sofern der Durchmesser der Kolbenstange 2 groß genug ist, kann die Bypasseinrichtung jedoch auch direkt in das arbeitskolbenseitige Ende der Kolbenstange 2 integriert werden.

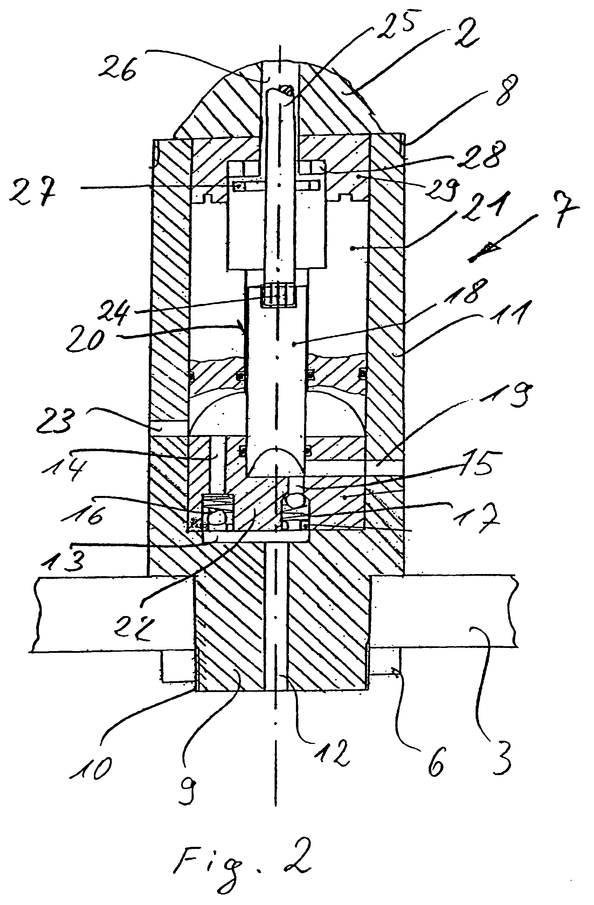

Bei der Bypasseinrichtung gemäß Fig. 2 erfolgt die Verbindung zum unteren Arbeitsraum 5 durch eine zentrale Bohrung 12, die über einen Verbindungskanal 13 in Zuführbohrungen 14, 15 übergeht. Die Zuführbohrungen 14, 15 sind jeweils mit gegensinnig wirkenden federbelasteten Rückschlagventilen 16, 17 abgeschlossen. Diese Rückschlagventile 16, 17 können als fertiges Bauteil in die hier mit größerem Durchmesser ausgebildeten Zuführbohrungen 14, 15 eingepresst werden.

Die Zuführbohrung 15 wirkt mit einem Drehschieber 18 und einem radialen Einlass 19 zusammen. Durch Verdrehen des Drehschiebers 18 wird der Durchlass zum Einlass 19 gesperrt bzw. mehr oder minder geöffnet. Zuführbohrung 15, Rückschlagventil 17, Drehschieber 18 und Einlass 19 regeln den Bypass für die Strömung in Zugrichtung der Kolbenstange 2. In Druckrichtung ist dieser Bypass gesperrt.

Der Drehschieber 18 ist in einer zentralen Bohrung 20 eines weiteren Drehschiebers 21 sowie eines Bodenteils 22 im Gehäuse 11 gelagert. Durch dieses Bodenteil 22 erstreckt sich auch die Zuführbohrung 14, wie schon die Zuführbohrung 15, mit ihrem Rückschlagventil 17. Der weitere Drehschieber 21 ist innerhalb des Gehäuses 11 gelagert und liegt mit seiner Steuerkante auf dem Bodenteil 22 auf. Der zugehörige Auslass 23 durchdringt das Gehäuse 11 radial in Höhe des Drehschiebers 21. Durch Verdrehen des Drehschiebers 21 wird der Auslass 23 geschlossen oder mehr oder minder geöffnet. Zuführbohrung 14 und Rückschlagventil 16, Drehschieber 21 und Auslass 23 regeln den Bypass für die Strömung in Druckrichtung der Kolbenstange.

Am oberen Ende des zentralen Drehschiebers 18 ist ein Innensechskant vorgesehen, in den ein Außensechskant 24 am Ende einer Betätigungsstange 25 eingreift. Die Betätigungsstange 25 erstreckt sich, wie in Fig. 1 erkennbar, durch eine zentrale Bohrung 26 der Kolbenstange 2 bis zum oberen Ende der Kolbenstange 2 und ist von außen bedienbar.

Die Betätigungsstange 25 ist drehbar und axial verschiebbar. Dadurch bedingt kann die Betätigungsstange 25 in ihrer unteren Stellung mit dem Außensechskant 24 in die Sechskantbohrung des Drehschiebers 18 eingreifen und diesen verdrehen. Sobald die Betätigungsstange 25 im Sinne der Fig. 2 nach oben gezogen wird, ist keine Formschlussverbindung zwischen der Betätigungsstange 25 und dem Drehschieber 18 gegeben. In dieser Position greift ein mit der Betätigungsstange 25 verbundener Zahnkranz 27 in eine Innenverzahnung 28 eines mit dem Drehschieber 21 verbundenen Abschlussdeckels 29. Somit kann über die nach oben gezogene Betätigungsstange 25 alternativ der Drehschieber 21 verdreht werden. Um eine sichere Lagefixierung der Betätigungsstange 25 zu erreichen, kann vorgesehen werden, dass die Betätigungsstange 25 über eine Feder stets in die in Fig. 2 gezeigte Stellung verschoben wird. Das Herausziehen der Betätigungsstange 25 zum Verstellen des Drehschiebers 21 erfolgt dann gegen die Federkraft der nicht dargestellten Feder.

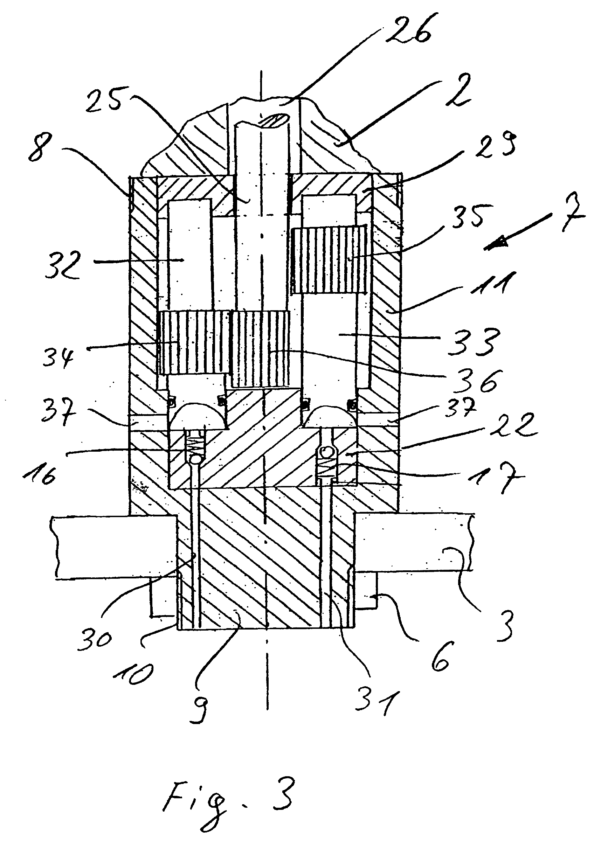

Die Ausbildung der Bypasseinrichtung gemäß Fig. 3 entspricht vom Aufbau der Ausbildung gemäß Fig. 2. Auch hier beinhaltet das Gehäuse 11 der Kolbenstangenverlängerung 7 die Bypasseinrichtung. Die Verstellung erfolgt wiederum durch eine Betätigungsstange 25, die sich durch eine Bohrung 26 in der Kolbenstange 2 erstreckt. Lediglich der Aufbau der Drehschieber und Bypasskanäle ist unterschiedlich zur Ausbildung nach Fig. 2. Bei der Ausbildung gemäß Fig. 3 erstrecken sich zwei Bohrungen 30, 31 sowohl durch den Zapfen 9 des Gehäuses 11 als auch durch das Bodenteil 22. Im Bereich des Bodenteils 22 sind wiederum Rückschlagventile 16, 17 angeordnet.

Am Auslauf der Bohrungen 30, 31 ist jeweils ein Drehschieber 32, 33 angeordnet. Der Drehschieber 32 weist gemäß Fig. 3 unten eine Verzahnung 34 und der Drehschieber 33 oben eine Verzahnung 35 auf. Die Betätigungsstange 25 gemäß Fig. 3 weist ebenfalls eine Verzahnung 36 auf. Durch axiales Verschieben der Betätigungsstange 25 greift die Verzahnung 36 der Betätigungsstange 25 somit entweder in die Verzahnung 34 des Drehschiebers 32 oder in die Verzahnung 35 des Drehschiebers 33 ein, sodass, wie beim Ausführungsbeispiel gemäß Fig. 2, durch axiales Verschieben der Betätigungsstange 25 entweder der Drehschieber 32 oder der Drehschieber 33 verdreht werden kann. Die Steuerkanten der Drehschieber 32, 33 steuern den Querschnitt der jeweiligen Auslässe 37.

### Bezugszeichenliste

- 1.: Stoßdämpferrohr
- 2.: Kolbenstange
- 3.: Arbeitskolben
- 4.: Arbeitsraum
- 5.: Arbeitsraum
- 6.: Mutter
- 7.: Kolbenstangenverlängerung
- 8.: Gewinde
- 9.: Zapfen
- 10.: Gewinde
- 11.: Gehäuse
- 12.: Bohrung
- 13.: Verbindungskanal
- 14.: Zulaufbohrung
- 15.: Zulaufbohrung
- 16.: Rückschlagventil
- 17.: Rückschlagventil
- 18.: Drehschieber
- 19.: Einlass
- 20.: Bohrung
- 21.: Drehschieber
- 22.: Bodenteil
- 23.: Auslass
- 24.: Sechskant
- 25.: Betätigungsstange
- 26.: Bohrung
- 27.: Zahnkranz
- 28.: Innenverzahnung
- 29.: Abschlussdeckel
- 30.: Bohrung
- 31.: Bohrung
- 32.: Drehschieber
- 33.: Drehschieber
- 34.: Verzahnung
- 35.: Verzahnung
- 36.: Verzahnung
- 37.: Auslass

## Patentansprüche

1. Hydraulischer Stoßdämpfer mit einem mit Dämpfungsflüssigkeit gefüllten Stoßdämpferrohr (1) und einem am Ende einer oszillierend in das Stoßdämpferrohr (1) eintauchenden, eine zentrale Bohrung (26) aufweisende Kolbenstange (2) angeordneten, das Stoßdämpferrohr (1) in zwei Arbeitsräume (4, 5) teilenden, mit Durchbrüchen und Dämpfungsventilen versehenen Arbeitskolben (3) sowie einer innerhalb der Kolbenstange (2) oder einer Kolbenstangenverlängerung (7) angeordneten, mit seitlichen Auslässen (19, 23, 37) durch die Kolbenstange (2) oder Kolbenstangenverlängerung (7) versehenen einstellbaren Bypasseinrichtung, dessen Bypassquerschnitt für die Strömung in Zugrichtung der Kolbenstange (2) und für die Strömung in Druckrichtung unabhängig voneinander fest einstellbar sind, **dadurch gekennzeichnet, dass** im arbeitskolbenseitigen Ende der Kolbenstange (2) oder in der Kolbenstangenverlängerung (7) zwei Ventileinrichtungen mit jeweils einem, mit einem seitlichen Einlass bzw. Auslass (19 bzw. 23, 37) zusammenwirkenden Drehschieber (18, 21, 32, 33) angeordnet sind und innerhalb der Bohrung (26) der Kolbenstange (2) eine axial verschiebliche Betätigungsstange (25) mit einer oder zwei endseitigen Drehkupplungen angeordnet ist, die wechselweise mit dem jeweiligen Drehschieber (18, 21, 32, 33) kuppelbar ist.

2. Hydraulischer Stoßdämpfer nach Anspruch 1, **dadurch gekennzeichnet, dass** die Drehkupplungen als Zahnräder ausgebildet sind.

3. Hydraulischer Stoßdämpfer nach Anspruch 1, **dadurch gekennzeichnet, dass** die Drehkupplungen als Klauenkupplungen ausgebildet sind.

4. Hydraulischer Stoßdämpfer nach einem oder mehreren der Ansprüche 1 bis 3, **dadurch gekennzeichnet, dass** einer der Drehschieber (18) konzentrisch in einer Bohrung des anderen Drehschiebers (21) angeordnet ist.

## Claims

1. Hydraulic shock absorber having a shock absorber pipe (1) filled with damping fluid and having a working piston (3) which is provided with through-going orifices and damping valves, splits the shock absorber pipe (1) into two working chambers (4, 5) and is disposed at the end of a piston rod (2) which comprises a central bore (26) and is immersed in the shock absorber pipe (1) in an oscillating manner, said shock absorber also having an adjustable bypass device which is disposed within the piston rod (2) or a piston rod extension (7) and is provided with lateral outlets (19, 23, 37) through the piston rod (2) or the piston rod extension (7), wherein the bypass cross-section of the bypass device for the flow in the traction direction of the piston rod (2) and the bypass cross-section of the bypass device for the flow in the compression direction can be fixedly adjusted independently from one another, **characterised in that** two valve devices are disposed in the working piston-side end of the piston rod (2) or in the piston rod extension (7), said valve devices each having a rotary slide valve (18, 21, 32, 33) which cooperates with a lateral inlet or outlet (19 or 23, 37), and an axially slidable actuation rod (25) having one or two end-side rotary couplings is disposed within the bore (26) of the piston rod (2) and can be coupled alternately with the respective rotary slide valve (18, 21, 32, 33).

2. Hydraulic shock absorber as claimed in Claim 1, **characterised in that** the rotary couplings are formed as toothed wheels.

3. Hydraulic shock absorber as claimed in Claim 1, **characterised in that** the rotary couplings are formed as claw couplings.

4. Hydraulic shock absorber as claimed in one or several of Claims 1 to 3, **characterised in that** one of the rotary slide valves (18) is disposed concentrically in a bore of the other rotary slide valve (21).

## Revendications

1. Amortisseur hydraulique avec un tube d'amortissement (1) rempli d'un liquide d'amortissement, et un piston de travail (3) partageant le tube d'amortissement (1) en deux chambres de travail (4, 5), muni de percements et de soupapes d'amortissement, relié à l'extrémité d'une tige de piston (2) présentant un forage central (26), plongeant de manière oscillante dans le tube d'amortissement (1), ainsi qu'un dispositif de bypass réglable, disposé dans la tige de piston (2) ou dans un prolongement (7) de la tige de piston , muni de sorties latérales (19, 23, 27) à travers la tige de piston (2) ou dans le prolongement (7) de la tige de piston, dont les sections de bypass sont réglables indépendamment l'une de l'autre, pour l'écoulement dans le sens d'une traction et pour l'écoulement dans le sens d'une compression de la tige de piston (2), **caractérisé en ce que** sur l'extrémité côté travail de piston de la tige de piston (2) ou dans le prolongement (7) de la tige de piston, sont disposés deux dispositifs de soupape avec chaque fois un tiroir rotatif (18, 21, 32, 33) agissant avec une admission et, respectivement, une sortie latérale (19 ou 23, 37) et dans le forage (26) de la tige de piston (2), est disposé un tube d'actionnement (25) mobile de manière axiale avec un ou deux couplages de rotation terminaux, qui peuvent être couplés alternativement, avec chaque tiroir rotatif (18, 21, 32, 33).

2. Amortisseur hydraulique suivant la revendication 1, **caractérisé en ce que** les couplages de rotation sont formés comme des anneaux dentés.

3. Amortisseur hydraulique suivant la revendication 1, **caractérisé en ce que** les couplages de rotation sont formés comme des accouplements à griffe.

4. Amortisseur hydraulique suivant l'une ou plusieurs des revendications 1 à 3, **caractérisé en ce qu'**un des tiroirs rotatifs (18) est disposé de manière concentrique dans un forage d'un autre tiroir rotatif (21).
